# EUROPEAN PATENT SPECIFICATION

(11) **EP 2 514 273 B1**
(45) Date of publication and mention of the grant of the patent: **06.05.2015**
(21) Application number: 10809182.8
(22) Date of filing: 10.12.2010
(51) Int. Cl.: H05B 33/08

(54) **DRIVER FOR A SOLID STATE LAMP**
ANTRIEBSSCAHLTUNG FÜR EINE FESTKÖRPERLAMPE
DISPOSITIF DE PILOTAGE POUR UNE LAMPE À DEL

(30) Priority: 15.12.2009 EP 09179172
(43) Date of publication of application: 24.10.2012
(73) Proprietor: Koninklijke Philips N.V., 5656 AE Eindhoven (NL)
(72) Inventor: CLAESSENS, Dennis Johannes Antonius, NL-5656 AE Eindhoven (NL); HONTELÉ, Bertrand Johan Edward, NL-5656 AE Eindhoven (NL); VAN DER VEEN, Geert Willem, NL-5656 AE Eindhoven (NL)
(74) Representative: van Eeuwijk, Alexander Henricus Waltherus
(86) International application number: PCT/IB2010/055720
(87) International publication number: WO 2011/073865

(56) References cited:
- WO-A2-2008/112735
- US-A1- 2007 182 347
- US-A1- 2008 150 450
- US-A1- 2009 160 369

## Description

### FIELD OF THE INVENTION

The present invention relates in general to the field of lighting.

### BACKGROUND OF THE INVENTION

For the purpose of illumination, for instance in residential houses, it has been known for a long time to use incandescent lamps that are supplied by a mains circuit; in Europe, the mains circuit typically carries 230 V AC at 50 Hz. A big problem with incandescent lamps is the fact that they convert only a small portion of the available electrical energy into light energy: much energy is consumed and wasted in the form of heat. Thus, there has been and still is a development towards using more efficient lamps, for instance gas discharge lamps but particularly solid state lamps such as LEDs. It even is desirable to replace incandescent lamps by solid state lamps in an existing situation Solid state light sources such as LEDs need to be driven by an electronic driver, which receive the mains supply voltage and generate an output lamp current. This may be a separate device, but LED lamp units have conveniently been developed in which the LED light source and electronic driver are integrated. Particularly, the present invention relates to such integrated solid state lamps units capable of replacing existing incandescent lamps.

Incandescent lamps have a nominal rating, for instance 60 Watt, 100 Watt, etc, which corresponds to the lamp current when driven by mains voltage, and which corresponds to a certain amount of light emitted by the lamp. Likewise, LEDs have a nominal rating, corresponding to a nominal lamp current. In some circumstances, it is desirable to be able to reduce the amount of light emitted by the same lamp. For this purpose, dimmers have been developed: For the case of LEDs, the electronic driver has a dim function, in which the output lamp current is regulated. Also, specifically with a view to incandescent lamps, electronic mains dimmers have been developed, operating on the basis of phase cutting. Since phase cutting dimmers are commonly known, a discussion thereof will be omitted here. It is noted that such dimmers can be implemented as wall-mounted dimmers, so that a lamp supply voltage would always be a "dimmed" supply voltage.

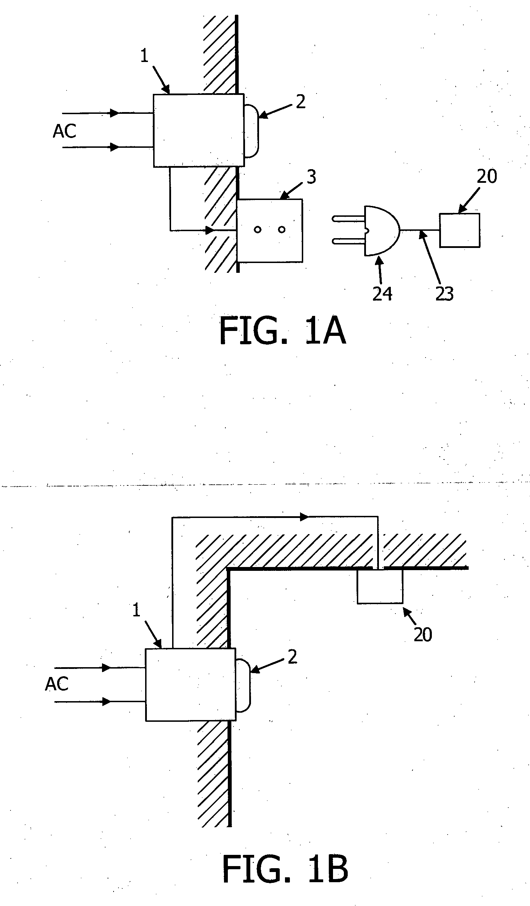

Figure 1A is a block diagram schematically illustrating one possible example of an illumination set up with a wall-mounted mains dimmer 1, and figure 1B is a similar block diagram of another example. In both cases, the dimmer 1 receives AC mains (Europe: 230V @ 50Hz) as an input voltage and outputs phase cut AC as an output voltage. A user can control the dimmer 1, for instance by rotating a control knob 2, which will cause the dimmer 1 to change the setting of the phase where the AC voltage is cut. In the example of figure 1A, there is a mains socket 3 connected to the dimmer output, and a lamp armature 20 is provided with an electrical cord 23 terminating in a connector 24 to be plugged into the mains socket 3. In the set up of figure 1B, the lamp armature 20 is connected to the dimmer output directly. In both cases, the armature 20 is supplied through the electronic dimmer 1, i.e. it only receives phase cut AC voltage, indicated as PCACV.

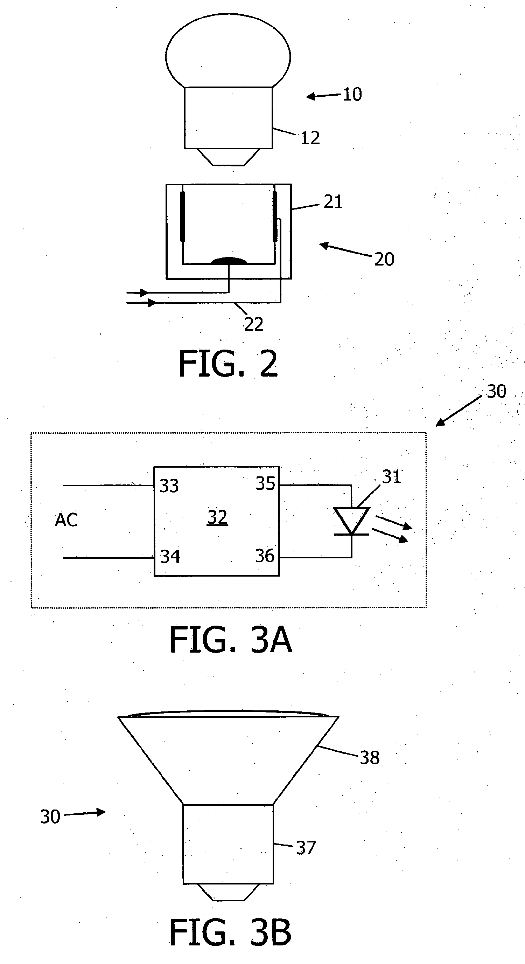

Figure 2 illustrates, that the armature 20 may comprise a lamp socket 21 for mechanically receiving and holding a lamp foot 12 of a light bulb 10, and for electrically connecting the lamp foot 12 to wiring 22 of the armature 20.

Figure 3A is a block diagram schematically illustrating an LED lamp unit 30, comprising at least one solid state lamp 31, for instance an LED light source element, and an LED driver 32 having supply input terminals 33, 34 for receiving mains voltage and having output terminals 35, 36 for providing output LED current to the LED light source element 31.

Figure 3B schematically illustrates a preferred physical implementation of an LED lamp unit 30 according to the present invention, comprising a first housing part 37 housing the driver electronics circuitry 32 and designed for cooperating with an armature's lamp socket 21, and a second housing part 38 accommodating the one or more LED light source elements.

A complication exists if a dimmable LED lamp unit 30 is to be coupled to an armature 20 supplied by such mains dimmer, for instance because a dimmed incandescent lamp is to be replaced by a dimmable LED lamp unit. In this dimmable LED lamp unit, the driver 32 would now receive phase-cut mains voltage PCACV at its supply input terminals 33, 34. This lamp driver 32, while designed for receiving full AC voltage as explained above, should be capable of operating in a dimming mode when receiving the phase-cut AC voltage PCACV. So on the one hand the electronic LED driver needs to function properly when receiving phase-cut mains voltage as supply. On the other hand, the phase-cut mains voltage contains dim information, in the form of the phase angle, relating to the dim level desired by the user, and the electronic LED dimmer needs to be capable to use this information as user control input, to read this dim information, and to regulate the output current for the LED lamp accordingly. Such dimmers are known per se, designed to provide dimming facility such as to dim the associated LEDs, i.e. it provides a suitable output voltage or current for its associated LEDs in response to the phase angle of the input supply voltage.

### SUMMARY OF THE INVENTION

The present invention relates particularly to the problem of detecting the dim-information in the phase-cut AC mains supply voltage as outputted by the dimmer, which is the input supply voltage to the driver. In prior art, this is typically done by measuring the RMS value of the input supply voltage. For instance US20090160369 provides a circuit for controlling a light emitting diode (LED) lighting fixture via a power line. The circuit includes an input for receiving a phase-cut AC supply voltage, a bridge rectifier, processing means for deriving dim information and driving means. This known circuit is typically designed for LED operation and is voltage controlled.

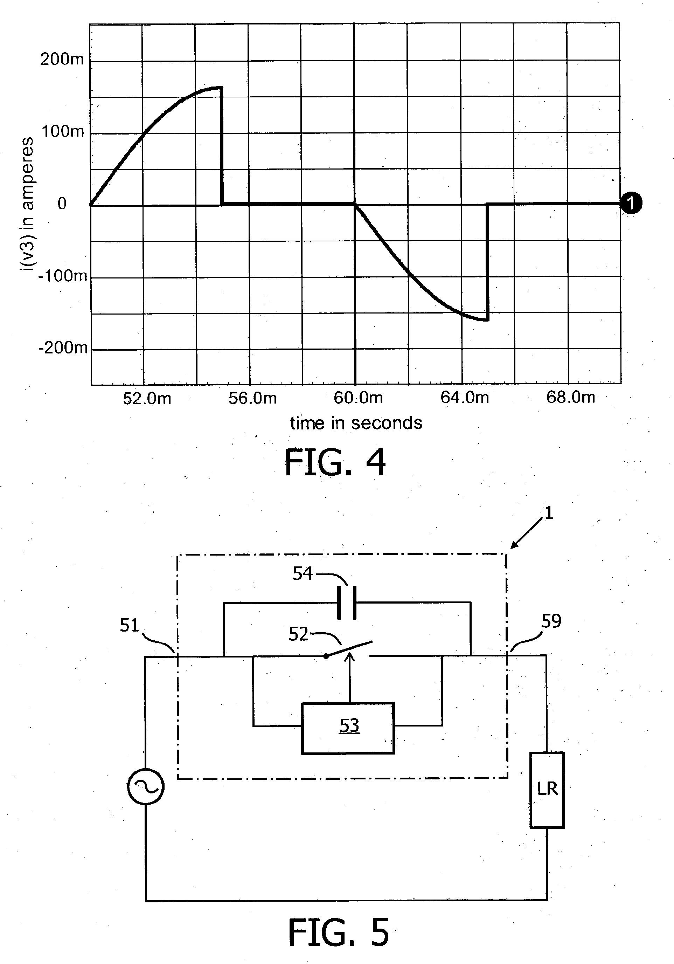

Figure 4 is a graph schematically illustrating the ideal waveform of the output voltage of a dimmer (assuming that no load or a resistive load is connected) using trailing edge dimming. The output voltage waveform has the shape of a sine-curve starting from zero up to a certain phase, at which moment the output voltage is abruptly cut down to zero, and the output voltage remains zero until the next zero-crossing of the sine-curve.

Figure 5 is a simplified block diagram illustrating some fundamentals of the implementation of wall-mounted dimmers. Wall-mounted dimmers are capable of replacing ordinary mains switches, for which reason they have only one input 51 for connection to a mains line and one output 59 for connection to a load. Between input 51 and output 59, a controllable switch 52 is mounted, that is either closed (conductive) or open. The dimmer 1 further comprises a control circuit 53 for controlling the switch 52, which control circuit 53 receives its power supply from the input 51 and output 59. Obviously, when the switch 52 is closed, the voltage drop between input 51 and output 59 and hence the voltage supply to the control circuit 53 would be zero. Further, the hard switching causes EMC noise. In order to reduce such EMC noise, and to maintain some supply to the control circuit 53, a capacitive element 54 is connected in parallel to the switch 52 between input 51 and output 59. This capacitive element 54 tries to maintain its voltage. As a consequence, the output voltage of the dimmer 1 does not go down to zero as abruptly as shown in figure 4.

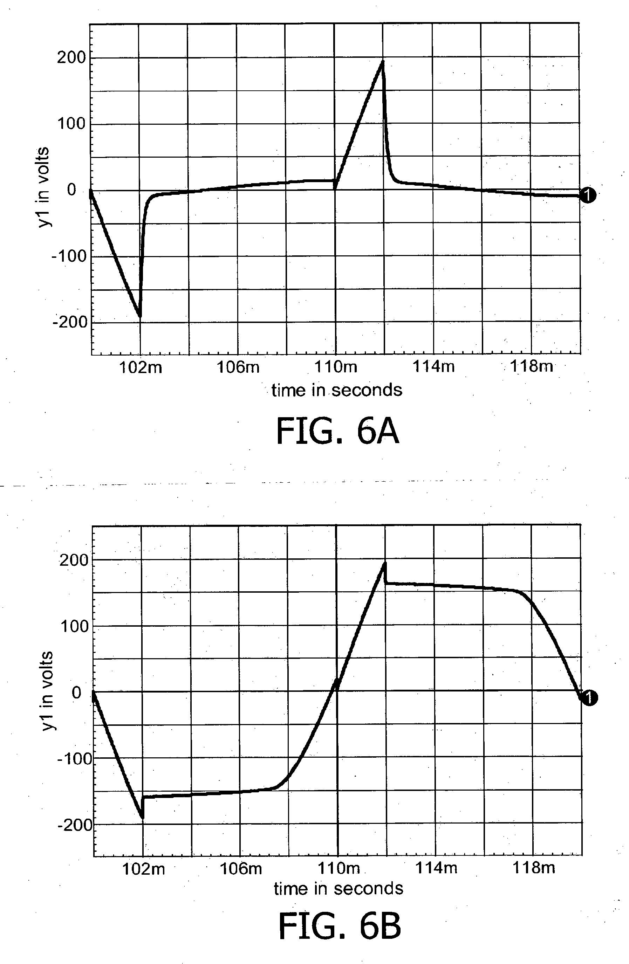

Figure 6A is a graph showing the actual output voltage of a dimmer, in the case of a 50 Hz mains voltage, when this dimmer is set at a conduction time of 2 ms (cutting phase = 36°) and a resistive load LR connected. The resistive load causes relatively rapid discharging of the capacitive element 54, and the cutting phase can easily be determined. The RMS value of the voltage is 54 V in this case.

Figure 6B is a similar graph for the situation where the resistive load LR is replaced by a LED driver 32. Such LED driver, typically having a bridge rectifier input stage, does not provide a sufficient current path when the switch 52 is open, and the capacitive element 54 keeps its charge. It is difficult to determine the cutting phase. The RMS value of the voltage is 140 V in this case. Not only is it more difficult to distinguish between several dimming levels in view of the reduced range of the RMS value, it also is difficult to predict how the RMS value will vary with cutting angle, while further this characteristic may vary from one individual dimmer to another.

Prior art solutions aim at discharging the capacitive element 54 by providing some bleeder circuit in the LED driver. While this approach works in the sense that cutting phase detectability is enhanced, a disadvantage is that the dissipation is increased.

It is a general objective of the present invention to eliminate or at least reduce the above problems. Particularly, the present invention aims to provide a way of more accurately detecting the cutting phase with less dissipation.

In order to meet these objectives, the present invention proposes to measure the driver input current rather than the input voltage.

Further advantageous elaborations are mentioned in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1A is a block diagram schematically illustrating one possible example of a wall-mounted mains dimmer;
figure 1B is a block diagram schematically illustrating another possible example of a wall-mounted mains dimmer;
figure 2 schematically illustrates a lamp armature;
figure 3A schematically illustrates an LED lamp unit;
figure 3B schematically illustrates a preferred physical implementation of an LED lamp unit;
figure 4 is a graph schematically illustrating the ideal waveform of the output voltage of a dimmer using trailing edge dimming;
figure 5 is a simplified block diagram illustrating some fundamentals of the implementation of wall-mounted dimmers;
figure 6A is a graph showing the output voltage of a dimmer in the case of a resistive load;
figure 6B is a graph showing the output voltage of a dimmer in the case of a LED driver as load;
figure 7 is a block diagram schematically illustrating a LED driver according to the present invention;
figure 8 is a block diagram schematically illustrating a possible embodiment of a driver input stage;
figures 9A and 9B show wave forms in the driver according to the present invention.

### DETAILED DESCRIPTION OF THE INVENTION

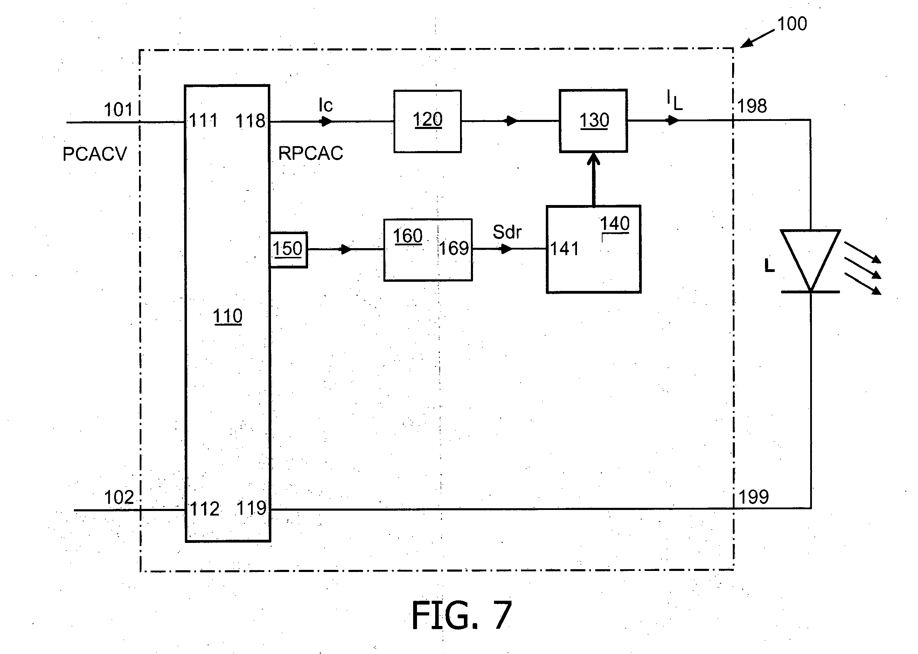

Figure 7 is a block diagram schematically illustrating a LED driver 100 which, according to the present invention, is adapted to measure the input current rather than the input voltage. The LED driver 100 has input terminals 101, 102 for receiving the phase cut AC mains voltage PCAC from the dimmer, and output terminals 198, 199 for connection to one or more LEDs L. A rectifier 110 has input terminals 111, 112 connected to the driver input terminals 101, 102, and has output terminals 118, 119 providing rectified mains voltage RPCAC. This voltage is used to charge a buffer 120, resulting in a charge current Ic. A controllable lamp current generating circuit 130 is supplied from the buffer 120, and is designed for generating suitable lamp current I_{L}. A control device 140, which may for instance comprise a suitably programmed microprocessor, controls the lamp current generating circuit 130 such that the lamp current I_{L} is generated in accordance with a certain desired output dim level, on the basis of an input signal received at a data input terminal 141. Since the design and operation of suitable lamp current generating circuits and control devices are known per se and are not the subject of the present invention, a more detailed explanation of their design and operation will be omitted here.

The driver 100 further comprises a current detector 150, arranged for detecting the input current into the driver 100, or the charge current Ic, or in any case a signal representing one of these currents or proportional to these currents. A signal shaper circuit 160 receives an output signal from the current detector 150 and provides a dim request signal Sdr to the data input terminal 141 of the control device 140. It is noted that the signal shaper circuit 160 may be integrated with the current detector 150 or may be integrated with the control device 140.

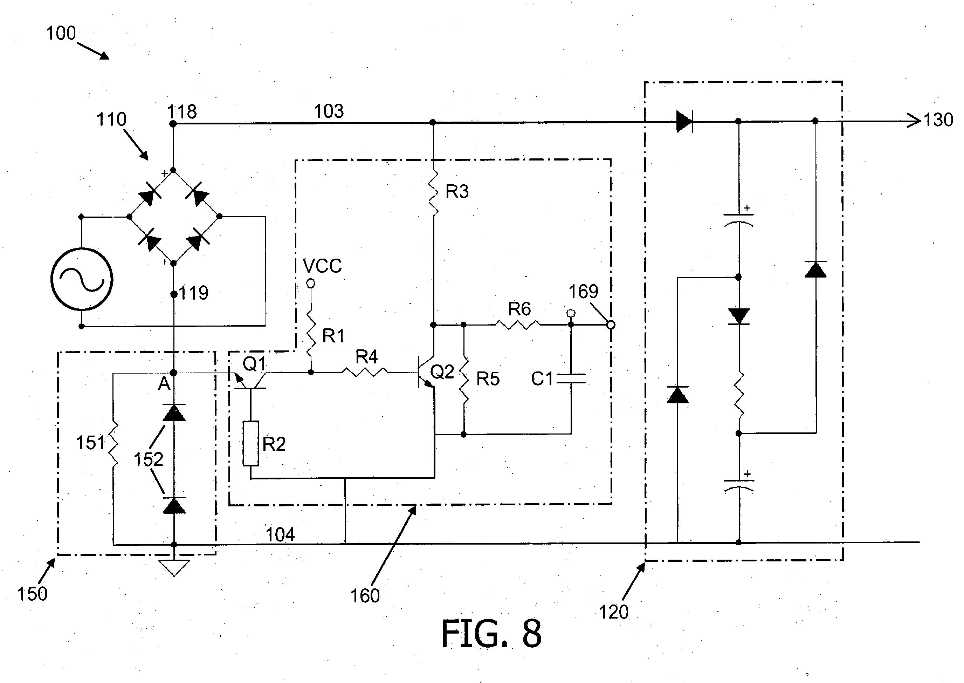

Figure 8 is a block diagram schematically illustrating a possible embodiment of the input stage of the driver 100 in more detail. The rectifier 110 is implemented as a bridge circuit of four diodes in a well-known configuration. The driver 100 has a positive bus line 103 coupled to the positive rectifier output terminal 118 and a negative bus line 104. In this embodiment, the current detector 150 is associated with the output of the rectifier 110, more specifically connected between the negative bus line 104 and the negative rectifier output terminal 119. The current detector 150 is implemented as an assembly of a resistor 151 connected in parallel to a series combination of a plurality of diodes 152. In this embodiment, two diodes are arranged in series, but it may be possible to use just one or to use three or more. The node A between the current detector 150 and the negative rectifier output terminal 119 constitutes the current detector output.

The signal shaper circuit 160 comprises a first transistor Q1 having its collector coupled to a positive supply voltage Vcc via a first resistor R1, having its base coupled to the negative bus line 104 via a second resistor R2, and having its emitter coupled to the detector output A. The signal shaper circuit 160 comprises a second transistor Q2 having its collector coupled to the positive bus line 103 via a third resistor R3, having its base coupled to the first transistor's collector via a fourth resistor R4, and having its emitter coupled to the negative bus line 104. A fifth resistor R5 is connected to the collector and emitter terminals of the second transistor Q2. In parallel with this fifth resistor R5, a series arrangement of a sixth resistor R6 and a capacitor C1 is connected. The node B between the sixth resistor R6 and the capacitor C1 constitutes the signal shaper 160 output 169, outputting the dim request signal Sdr to the control device 140.

It is preferred that the buffer 120 is of a type that results in a high power-factor. The exemplary embodiment of the buffer 120 shown in figure 8 fulfils this requirement. Alternative embodiments fulfilling this requirement should be apparent to persons skilled in the art.

The operation is as follows.

Without input current, there is no voltage drop over the diodes 152, the first transistor Q1 is not conducting, the second transistor Q2 receives the positive supply voltage Vcc and is conducting to discharge the capacitor C1.

With input current, there is a sufficient voltage drop over the diodes 152 to cause the first transistor Q1 to conduct. The voltage at the collector of the second transistor Q2 follows the instantaneous voltage at the positive bus line 103, and this voltage is used to charge the capacitor C1.

Thus, the voltage over the capacitor C1 takes a substantially constant value that increases when the time periods with input current are longer and that decreases when the time periods with input current are shorter. The voltage over the capacitor C1 is transferred to the output 169. Effectively, R5, R6 and C1 constitute a low-pass filter.

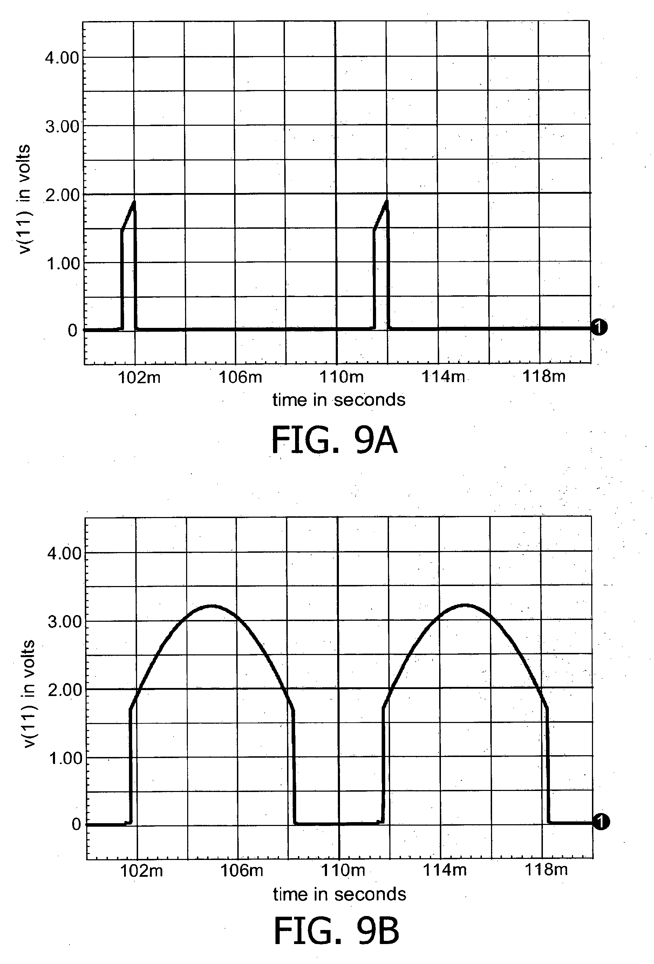

Figure 9A is a graph showing the waveform of the voltage at the collector of the second transistor Q2 for the same situation of figure 6B. The RMS value is 100 mV in this example. Figure 9B is a graph showing the waveform of the same voltage for the situation of 9 ms conduction time. The RMS value is 1700 mV in this example.

It is noted that the embodiment discussed in the above is specifically suitable for cooperation with control circuits which have been developed for measuring and analyzing the RMS value of an input signal derived from the input voltage. However, it is also possible that a control circuit is actually timing the cutting time of the input signal. For such cases, a pulse width modulated square block signal would be sufficient, and the signal at the collector of the first transistor Q1 could be used without the circuit around the second transistor Q2 being needed.

Summarizing, the present invention concerns an electronic driver 100 for driving a solid state lamp L, comprising:
- an input for receiving phase=cut AC supply voltage (PCACV);
- a rectifier (110) for converting the received phase-cut AC supply voltage (PCACV) into a rectified phase-cut AC supply voltage (RPCAC);
- processing means (150, 160) for deriving from the phase-cut AC supply voltage (PCACV) dim information defining a desired dim level of the light output of the lamp (L);
- driving means (130, 140) for driving the solid state lamp (L) in a dim mode at a dim level corresponding to the desired dim level as derived from the phase-cut AC supply voltage (PCACV).

The electronic driver of the invention further discloses:
- the processing means comprising a current sensor (150) for sensing the driver's input current and for generating a current sensor output signal;
- the current sensor (150) being arranged in series with an output terminal (119) of the rectifier (110); and
- a signal processor (160) for processing the current sensor output signal, the signal processor comprising a switching element for switching on and off in dependence of the sensor output signal and the signal processor generating a dim request signal (Sdr) proportional to an average of the duty cycle of the switching element.

In an embodiment, the driver comprises:
- a controllable lamp current generator 130 for generating lamp current;
- an energy buffer (120) for providing supply voltage to the lamp current generator (130);
- a control device (140) having a data input (141) for receiving the dim request signal (Sdr) and being designed to control the lamp current generator (130) to generate dimmed lamp current in accordance with the dim request signal (Sdr);
- the rectifier (110) coupled to said buffer (120) for providing the rectified phase-cut AC supply voltage (RPCAC) to said buffer (120) such as to charge the buffer (120) by charge current (Ic).

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims. For instance, the dimmable driver may be associated with the lamp armature.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Electronic driver (100) for driving a solid state lamp (L), the driver comprising:
- an input for receiving phase-cut AC supply voltage (PCACV);
- a rectifier (110) for converting the received phase-cut AC supply voltage (PCACV) into a rectified phase-cut AC supply voltage (RPCAC);
- processing means (150, 160) for deriving from the phase-cut AC supply voltage (PCACV) a dim request signal (Sdr) defining a desired dim level of the light output of the lamp (L);
- driving means (130, 140) for driving the solid state lamp (L) in a dim mode at a dim level corresponding to the desired dim level as derived from the phase-cut AC supply voltage (PCACV);
**characterized by**,
- the processing means comprising a current sensor (150) for sensing the driver's input current and for generating a current sensor output signal, the current sensor (150) being arranged in series with an output terminal (119) of the rectifier (110); and
- the processing means comprising a signal processor (160) for processing the current sensor output signal, the signal processor comprising a switching element for switching on and off in dependence of the sensor output signal and the signal processor generating the dim request signal (Sdr) as a signal proportional to an average of the duty cycle of the switching element.

2. Driver according to claim 1, comprising:
- a controllable lamp current generator (130) for generating lamp current (I_{L});
- an energy buffer (120) for providing supply voltage to the lamp current generator (130);
- a control device (140) having a data input (141) for receiving the dim request signal (Sdr) and being designed to control the lamp current generator (130) to generate dimmed lamp current in accordance with the dim request signal (Sdr);
- the rectifier (110) coupled to said buffer (120) for providing the rectified phase-cut AC supply voltage (RPCAC) to said buffer (120) such as to charge the buffer (120) by charge current (Ic).

3. Driver according to claim 2, wherein the current sensor (150) comprises one diode, or a series arrangement of two or more diodes (152), arranged in series with an output terminal (119) of the rectifier (110).

4. Driver according to claim 3, wherein the current sensor (150) further comprises a resistor (151) arranged in parallel to the diode or diodes (152).

5. Driver according to claim 4, wherein the signal processor (160) comprises:
- a first transistor (Q2) having its emitter terminal coupled to one voltage bus (104) of the driver, having its collector terminal coupled to another voltage bus (103) of the driver through a first resistor (R3), and having its base terminal coupled to a reference source (Vcc) through a voltage divider (R1, R4);
- a low-pass filter (R5, R6, C1) having an input coupled to the collector terminal of the first transistor (Q2) and having an output coupled to a signal output (169) of the signal processor (160);
- a second transistor (Q1) having its collector terminal coupled to a node of said voltage divider (R1, R4), having its base terminal coupled to a voltage bus (104) of the driver through a second resistor (R2), and having its emitter terminal coupled to an output (A) of the current sensor (150).

6. Driver according to claim 2, wherein the energy buffer (120) comprises at least one capacitor.

7. Lamp unit (30) comprising at least one solid state lamp (31) and at least one driver (32; 100) according to any of the previous claims for driving the at least one solid state lamp.

8. Armature (20) for receiving at least one solid state lamp (31), the armature comprising at least one driver (32; 100) according to any of the previous claims for driving the at least one solid state lamp.

9. Method for driving a solid state lamp (L), the method comprising the steps of:
- receiving phase-cut AC supply voltage (PCACV) and receiving input current from the supply voltage;
- converting the received phase-cut AC supply voltage (PCACV) into a rectified phase-cut AC supply voltage (RPCAC);
- deriving from the phase-cut AC supply voltage (PCACV) a dim request signal (Sdr) defining a desired dim level of the light output of the lamp (L);
- driving the solid state lamp (L) in a dim mode at a dim level corresponding to the desired dim level as derived from the phase-cut AC supply voltage (PCACV);
**characterized by**,
- sensing the rectified current and generating a current sensor output signal;
- generating an on/off signal in dependenc of the sensor output signal; and
- generating the dim request signal (Sdr) as a signal proportional an average of the duty cycle of the on/off signal

## Patentansprüche

1. Elektronischer Treiber (100) zur Ansteuerung einer Festkörperlampe (L), wobei der Treiber umfasst:
- einen Eingang zur Aufnahme phasenangeschnittener AC-Versorgungsspannung (PCACV);
- einen Gleichrichter (110) zur Umwandlung der aufgenommenen phasenangeschnittenen AC-Versorgungsspannung (PCACV) in eine gleichgerichtete phasenangeschnittene AC-Versorgungsspannung (RPCAC);
- Verarbeitungsmittel (150, 160), um von der phasenangeschnittenen AC-Versorgungsspannung (PCACV) ein Dimmungsanforderungssignal (Sdr) abzuleiten, das einen gewünschten Dimmungspegel des Lichtstroms der Lampe (L) definiert;
- Ansteuerungsmittel (130, 140), um die Festkörperlampe (L) in einem Dimmungsmodus bei einem Dimmungsniveau anzusteuern, das dem gewünschten Dimmungsniveau, wie von der phasenangeschnittenen AC-Versorgungsspannung (PCACV) abgeleitet, entspricht;
**dadurch gekennzeichnet, dass**
- die Verarbeitungsmittel weiterhin einen Stromsensor (150) umfassen, um den Eingangsstrom des Treibers abzutasten und ein Stromsensorausgangssignal zu erzeugen, wobei der Stromsensor (150) in Reihe mit einem Ausgangsanschluss (119) des Gleichrichters (110) geschaltet ist; und
- die Verarbeitungsmittel einen Signalprozessor (160) zur Verarbeitung des Stromsensorausgangssignals umfassen, wobei der Signalprozessor ein Schaltelement umfasst, um in Abhängigkeit des Sensorausgangssignals ein- und auszuschalten, und der Sig-nalprozessor das Dimmungsanforderungssignal (Sdr) als ein Signal proportional zu einem Mittelwert des Tastverhältnisses des Schaltelements erzeugt.

2. Treiber nach Anspruch 1, umfassend:
- einen steuerbaren Lampenstromgenerator (130) zur Erzeugung von Lampenstrom (I_{I});
- einen Energiepuffer (120), um dem Lampenstromgenerator (130) eine Versorgungsspannung zuzuführen;
- eine Steuereinrichtung (140), die einen Dateneingang (141) zum Empfang des Dimmungsanforderungssignals (Sdr) aufweist und so eingerichtet ist, dass sie den Lampenstromgenerator (130) so steuert, dass er gedimmten Lampenstrom entsprechend dem Dimmungsanforderungssignal (Sdr) erzeugt;
- den mit dem Puffer (120) gekoppelten Gleichrichter (110), um dem Puffer (120) die gleichgerichtete phasenangeschnittene AC-Versorgungsspannung (RPCAC) zuzuführen, um den Puffer (120) mit Ladestrom (Ic) zu laden.

3. Treiber nach Anspruch 2, wobei der Stromsensor (150) eine Diode oder eine Reihenanordnung von zwei oder mehr Dioden (152) umfasst, die in Reihe mit einem Ausgangsanschluss (119) des Gleichrichters (110) angeordnet sind.

4. Treiber nach Anspruch 3, wobei der Stromsensor (150) weiterhin einen parallel zu der Diode oder den Dioden (152) angeordneten Widerstand (151) umfasst.

5. Treiber nach Anspruch 4, wobei der Signalprozessor (160) umfasst:
- einen ersten Transistor (Q2), dessen Emitteranschluss mit einem Spannungsbus (104) gekoppelt ist, dessen Kollektoranschluss durch einen ersten Widerstand (R3) mit einem weiteren Spannungsbus (103) des Treibers gekoppelt ist und dessen Basisanschluss durch einen Spannungsteiler (R1, R4) mit einer Referenzquelle (Vcc) gekoppelt ist;
- ein Tiefpassfilter (R5, R6, C1), das einen mit dem Kollektoranschluss des ersten Transistors (Q2) gekoppelten Eingang aufweist und einen mit einem Signalausgang (169) des Signalprozessors (160) gekoppelten Ausgang aufweist;
- einen zweiten Transistor (Q1), dessen Kollektoranschluss mit einem Knoten des Spannungsteilers (R1, R4) gekoppelt ist, dessen Basisanschluss durch einen zweiten Widerstand (R2) mit einem Spannungsbus (104) des Treibers gekoppelt ist und dessen Emitteranschluss mit einem Ausgang (A) des Stromsensors (150) gekoppelt ist.

6. Treiber nach Anspruch 2, wobei der Energiepuffer (120) mindestens einen Kondensator umfasst.

7. Lampeneinheit (30) mit mindestens einer Festkörperlampe (31) und mindestens einem Treiber (32; 100) nach einem der vorangegangenen Ansprüche zur Ansteuerung der mindestens einen Festkörperlampe.

8. Armatur (20) zur Aufnahme von mindestens einer Festkörperlampe (31), wobei die Armatur mindestens einen Treiber (32; 100) nach einem der vorangegangenen Ansprüche zur Ansteuerung der mindestens einen Festkörperlampe umfasst.

9. Verfahren zur Ansteuerung einer Festkörperlampe (L), wobei das Verfahren die folgenden Schritte umfasst, wonach:
- phasenangeschnittene AC-Versorgungsspannung (PCACV) aufgenommen und Eingangsstrom aus der Versorgungsspannung empfangen wird;
- die aufgenommene phasenangeschnittene AC-Versorgungsspannung (PCACV) in eine gleichgerichtete phasenangeschnittene AC-Versorgungsspannung (RPCAC) umgewandelt wird;
- von der phasenangeschnittenen AC-Versorgungsspannung (PCACV) ein Dimmungsanforderungssignal (Sdr) abgeleitet wird, das einen gewünschten Dimmungspegel des Lichtstroms der Lampe (L) definiert;
- die Festkörperlampe (L) in einem Dimmungsmodus bei einem Dimmungsniveau angesteuert wird, das dem gewünschten Dimmungsniveau, wie von der phasenangeschnittenen AC-Versorgungsspannung (PCACV) abgeleitet, entspricht;
**dadurch gekennzeichnet, dass**
- der gleichgerichtete Strom abgetastet und ein Stromsensorausgangssignal erzeugt wird;
- ein Ein/Aus-Signal in Abhängigkeit des Sensorausgangssignals erzeugt wird; und
- das Dimmungsanforderungssignal (Sdr) als ein Signal proportional zu einem Mittelwert des Tastverhältnisses des Ein/Aus-Signals erzeugt wird.

## Revendications

1. Excitateur électronique (100) pour exciter une lampe à semi-conducteur (L), l'excitateur comprenant :
- une entrée pour recevoir une tension d'alimentation alternative à coupure de phase (PCACV) ;
- un redresseur (110) pour convertir la tension d'alimentation alternative à coupure de phase (PCACV) reçue en tension d'alimentation alternative à coupure de phase redressée (RPCAC) ;
- des moyens de traitement (150, 160) pour obtenir, à partir de la tension d'alimentation alternative à coupure de phase (PCACV), un signal de demande de réduction d'intensité de lumière (Sdr) définissant un niveau souhaité de réduction d'intensité de lumière du rendement lumineux de la lampe (L) ;
- des moyens d'excitation (130, 140) pour exciter la lampe à semi-conducteur (L) dans un mode de réduction d'intensité de lumière à un niveau de réduction d'intensité de lumière correspondant au niveau souhaité de réduction d'intensité de lumière tel qu'il est obtenu à partir de la tension d'alimentation alternative à coupure de phase (PCACV) ;
**caractérisé en ce que**
- les moyens de traitement comprennent un capteur de courant (150) pour la détection du courant d'entrée de l'excitateur et pour générer un signal de sortie de capteur de courant, le capteur de courant (150) étant agencé en série avec une borne de sortie (119) du redresseur (110) ; et
- les moyens de traitement comprenant un processeur de signal (160) pour traiter le signal de sortie de capteur de courant, le processeur de signal comprenant un élément de commutation pour s'allumer et s'éteindre en dépendance du signal de sortie de capteur et le processeur de signal générant un signal de demande de réduction d'intensité de lumière (Sdr) en tant que signal proportionnel à une moyenne du cycle de service de l'élément de commutation.

2. Excitateur selon la revendication 1, comprenant :
- un générateur de courant de lampe pouvant être commandé (130) pour générer un courant de lampe (I_{L}) ;
- un amortisseur d'énergie (120) pour fournir une tension d'alimentation au générateur de courant de lampe (130) ;
- un dispositif de commande (140) ayant une entrée de données (141) pour recevoir le signal de demande de réduction d'intensité de lumière (Sdr) et étant conçu pour commander le générateur de courant de lampe (130) pour générer un courant de lampe à intensité de lumière réduite conformément au signal de demande de réduction d'intensité de lumière (Sdr) ;
- le redresseur (110) couplé audit amortisseur (120) pour fournir la tension d'alimentation alternative à coupure de phase redressée (RPCAC) audit amortisseur (120) afin de charger l'amortisseur (120) par courant de charge (Ic).

3. Excitateur selon la revendication 2, dans lequel le capteur de courant (150) comprend une diode, ou un agencement en série de deux, ou plus, diodes (152), agencé en série avec une borne de sortie (119) du redresseur (110).

4. Excitateur selon la revendication 3, dans lequel le capteur de courant (150) comprend en outre une résistance (151) agencée en parallèle à la diode ou aux diodes (152).

5. Excitateur selon la revendication 4, dans lequel le processeur de signal (160) comprend :
- un premier transistor (Q2) ayant sa borne d'émetteur couplée à un bus de tension (104) de l'excitateur, ayant sa borne de collecteur couplée à un autre bus de tension (103) de l'excitateur par l'intermédiaire d'une première résistance (R3), et ayant sa borne de base couplée à une source de référence (Vcc) par l'intermédiaire d'un réducteur de tension (R1, R4) ;
- un filtre passe-bas (R5, R6, C1) ayant une entrée couplée à la borne de collecteur du premier transistor (Q2) et ayant une sortie couplée à une sortie de signal (169) du processeur de signal (160) ;
- un second transistor (Q1) ayant sa borne de collecteur couplée à un noeud dudit réducteur de tension (R1, R4), ayant sa borne de base couplée à un bus de tension (104) de l'excitateur par l'intermédiaire d'une seconde résistance (R2), et ayant sa borne d'émetteur couplée à une sortie (A) du capteur de courant (150).

6. Excitateur selon la revendication 2, dans lequel l'amortisseur d'énergie (120) comprend au moins un condensateur.

7. Unité à lampe (30) comprenant au moins une lampe à semi-conducteur (31) et au moins un excitateur (32 ; 100) selon une quelconque des revendications précédentes pour exciter l'au moins une lampe à semi-conducteur.

8. Induit (20) pour recevoir au moins une lampe à semi-conducteur (31), l'induit comprenant au moins un excitateur (32 ; 100) selon une quelconque des revendications précédentes pour exciter l'au moins une lampe à semi-conducteur.

9. Procédé pour exciter une lampe à semi-conducteur (L), le procédé comprenant les étapes de :
- la réception de tension d'alimentation alternative à coupure de phase (PCACV) et la réception de courant d'entrée à partir de la tension d'alimentation ;
- la conversion de la tension d'alimentation alternative à coupure de phase (PCACV) reçue en une tension d'alimentation alternative à coupure de phase redressée (RPCAC) ;
- l'obtention, à partir de la tension d'alimentation alternative à coupure de phase (PCACV), d'un signal de demande de réduction d'intensité de lumière (Sdr) définissant un niveau souhaité de réduction d'intensité de lumière du rendement lumineux de la lampe (L) ;
- l'excitation de la lampe à semi-conducteur (L) dans un mode de réduction d'intensité de lumière à un niveau de réduction d'intensité de lumière correspondant au niveau souhaité de réduction d'intensité de lumière tel qu'il est obtenu à partir de la tension d'alimentation alternative à coupure de phase (PCACV) ;
**caractérisé par**
- la détection du courant redressé et la génération d'un signal de sortie de capteur de courant ;
- la génération d'un signal de marche/d'arrêt en dépendance du signal de sortie de capteur ; et
- la génération du signal de demande de réduction d'intensité de lumière (Sdr) sous forme de signal proportionnel à une moyenne du cycle de service du signal de marche/d'arrêt.
